# EUROPÄISCHE PATENTANMELDUNG

(11) **EP 4 653 716 A1**
(43) Veröffentlichungstag der Anmeldung: **26.11.2025**
(21) Anmeldenummer: 24177081.7
(22) Anmeldetag: 21.05.2024
(51) Int. Cl.: F16D 1/06, F16D 1/108

(54) **WELLE-NABE-VERBINDUNG MIT AXIALSICHERUNG**

(71) Anmelder: Flender GmbH, 46395 Bocholt (DE)
(72) Erfinder: THELING, Julian, 46395 Bocholt (DE); NAFE, Michael, 46395 Bocholt (DE); WILTING, Maik, 46395 Bocholt (DE); DEGELING, Markus, 46395 Bocholt (DE)
(74) Vertreter: Michalski Hüttermann & Partner Patentanwälte mbB

(57) **Zusammenfassung**

Welle-Nabe-Verbindung 10 für eine Maschineneinheit, insbesondere ein Planetengetriebe, mit einem Wellenelement, einem mit dem Wellenelement 12 über eine Steckverzahnung 16 um eine c antriebsverbundenes und das Wellenelement 12 umgebendes Nabenelement 14, wobei zur Axialkraftübertragung ein das Wellenelement 12 und das Nabenelement 14 verbindendes Ringelement 20 vorgesehen und das Ringelement 20 in radialer Richtung zumindest zweiteilig ausgeführt ist und einen zwischen dem Wellenelement 12 und dem Nabenelement 14 einsitzenden ersten Axialabschnitt 22₁ und einen zweiten Axialabschnitt 22₂ ausbildet, wobei der zweite Axialabschnitt 22₂ einen Radialbund 18 des Nabenelements 14 und das Wellenelement 12 den ersten Axialabschnitt 22₁ aus einer ersten axialen Richtung hintergreifen. Das Ringelement 20 und die formschlüssige Verbindung zwischen Wellenelement 12 und Nabenelement 14 vermindert durch die erreichte axiale und radiale Führung ein signifikantes Abkippen von Wellenelement zu Nabenelement in der Steckverzahnung 16.

## Beschreibung

Die Erfindung betrifft eine Welle-Nabe-Verbindung für eine Maschineneinheit, insbesondere ein Planetengetriebe, mit einem Wellenelement, ein mit dem Wellenelement über eine Steckverzahnung um eine Hauptrotationsachse A_{R} antriebsverbundenes und das Wellenelement außenumfänglich umgebendes Nabenelement, wobei zur Axialkraftübertragung ein das Wellenelement und das Nabenelement verbindende Ringelement vorgesehen ist.

Es werden beispielsweise Industriegetriebe oder Getriebe in Windenergieanlagen betrachtet, wobei letztere u.a. als Planetengetriebe ausgeführt sein können, die eine oder mehrere Planetenstufen oder eine Stirnradstufe aufweisen können. In Planetenstufen aber auch einfachen Stirnradstufen werden während des Betriebs bei Verwendung einer Schrägverzahnung durch den Zahnkontakt Axialkräfte erzeugt, welche von den Wellenlagerungen und den umliegenden Komponenten aufgenommen bzw. abgestützt werden müssen. In Planetengetrieben summiert sich die Axialkraft aus allen Zahneingriffen der Planetenräder zu dem Hohlrad und zu dem Sonnenrad auf, wodurch besonders hohe Axialkräfte an diesen Komponenten auftreten können. Die auftretende Axialkraft resultiert dabei direkt aus dem anliegenden Drehmoment sowie dem Schrägungswinkel der Verzahnung. Bei einer Last- bzw. Drehrichtungsumkehr, einem sogenannten Reversierbetrieb, wechselt zudem die Axialkraft ihre Richtung, sodass eine Axialkraftabstützung sowohl für den Normalbetrieb als auch den Reversierbetrieb und damit in beide axiale Richtungen erfolgen muss.

Zudem kann aufgrund von Bauraum-Restriktionen eine geringe Breite der verwendeten Steck- bzw. Kurzverzahnung vorliegen, sodass sich an dieser Stelle ein erhöhtes Risiko auf Abkippen der miteinander verbundenen Maschinenelemente ergeben kann.

Bisherige Lösungsansätze sehen eine Axialkraftsicherung zwischen den Maschinenelementen über einen Sicherungsring vor. Im Fall eines Planetengetriebes kann der Sicherungsring zwischen einer Sonnenwelle einer Planetenstufe und dem Planetenträger einer nachfolgenden Planetenstufe oder einem nachfolgenden Nabenelement einer Stirnradstufe angeordnet sein. Aufgrund von immer größer werdenden Dimensionen insbesondere in Windkraftanlagen können kaum genormte Sicherungsringgrößen verwendet werden. Sonderringe sind nur zu hohen Kosten verfügbar und aufgrund der hohen Klemmkräfte und Abmaße schwer zu montieren. Alternativ kommen axial verschraubte, zweiteilige Ringelemente zum Einsatz, die zwischen Laufverzahnung einer ersten Planetenstufe und Steckverzahnung positioniert werden und anschließend an den Planetenträger der nachfolgenden Planetenstufe geschraubt werden. Bei Reversierbetrieb fungieren die Hälften der Ringelemente als Axialkraftsicherung an der Steckverzahnung. Bei Nennbetrieb ist die Sicherung über eine Paarung axialer Kontaktflächen zwischen Sonnenwelle und Planetenträger sichergestellt. Diese Variante weist jedoch ein erhöhtes Risiko in Hinblick auf dynamische Lasten auf, insbesondere im Hinblick auf eine Dauerbelastung der Schraubverbindungen. Zu nennen ist hier die DE 10 2016 213 476 A1. Es besteht ein ständiges Bedürfnis eine verbesserte Axialkraftsicherung in dem beschriebenen Bereich bereitzustellen.

Es ist die Aufgabe der Erfindung Maßnahmen aufzuzeigen, die eine verbesserte Axialkraftsicherung zwischen zwei Maschinenelementen ermöglichen.

Die Lösung der Aufgabe erfolgt durch eine Welle-Nabe-Verbindung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Welle-Nabe-Verbindung für eine Maschineneinheit, insbesondere ein Planetengetriebe, mit einem Wellenelement, einem mit dem Wellenelement über eine Steckverzahnung um eine Hauptrotationsachse A_{R} antriebsverbundenes und die Welle umgebendes Nabenelement, wobei zur Axialkraftübertragung ein das Wellenelement und das Nabenelement verbindende Ringelement vorgesehen und das Ringelement in radialer Richtung zumindest zweiteilig ausgeführt ist und einen zwischen dem Wellenelement und dem Nabenelement einsitzenden ersten Axialabschnitt und einen zweiten Axialabschnitt ausbildet, wobei der zweite Axialabschnitt einen Radialbund des Nabenelements und das Wellenelement den ersten Axialabschnitt aus einer ersten axialen Richtung hintergreifen.

Die Hauptrotationsachse A_{R} legt vorliegend die Axialrichtung fest, so dass sich aus dieser Axialrichtung die jeweiligen Radialrichtungen ergeben. Das Nabenelement kann je nach zugrundliegender Konfiguration als Hohlwelle oder als hohler Wellenansatz ausgeführt sein. Die Steckverzahnung, die das Wellenelement und das Nabenelement zur Übertragung eines Drehmoments formschlüssig miteinander verbindet, kann als Kurzverzahnung bezeichnet werden. Das Nabenelement und das Wellenelement können über Lageranordnungen beispielsweise gegenüber einer Gehäusestruktur gelagert sein, wobei eine der Lagerungen dazu ausgebildet ist Axialkräfte aufzunehmen bzw. abzustützen.

Über das Hintergreifen - einerseits Hintergreifen durch den zweiten Axialabschnitt des Radialbunds des Nabenelements und andererseits Hintergreifen durch das Wellenelement des ersten Axialabschnitts - ergibt sich eine formschlüssige Verbindung zwischen Wellenelement und Nabenelement im Fall des Reversierbetriebes. Im Reversierbetrieb strebt das Wellenelement infolge der Schrägverzahnung in axialer Richtung weg von dem Nabenelement. Das Wellenelement rutscht axial in der Steckverzahnung solange, bis das Ringelement zu Anlage kommt und sich an dem Wellenelement und dem Nabenelement formschlüssig abstützt und eine weitere Relativbewegung verhindert. Hierdurch ist dann die Axialkraftabstützung realisiert. Im Nennbetrieb, in der die umgekehrt axiale Kraftrichtung vorliegt, wird die Axialkraft über das Ringelement von dem Wellenelement an dem Nabenelement abgestützt bzw. übertragen, da das Ringelement axial zwischen Wellen- und Nabenelement einsitzt. In dem Fall erfolgt die Abstützung über den ersten Axialabschnitt des Ringelements. Es wird eine Axialkraftsicherung für beide Betriebsrichtungen, Nennbetriebsrichtung und Reversierbetriebsrichtung, realisiert. Die vorliegend beschriebene Axialkraftrichtung bei Nennbetrieb und bei Reversierbetrieb kann in bestimmten Anwendungsfällen auch umgekehrt realisiert sein.

Durch das Ringelement und die formschlüssige Verbindung zwischen Wellenelement und Nabenelement wird durch die erreichte axiale und radiale Führung ein signifikantes Abkippen von Wellenelement zu Nabenelement in der Steckverzahnung vermindert. Hierdurch wird der maximale Kippwinkel dieser Bauteile zueinander limitiert. Zudem wird das Risiko des Verkantens der Steckverzahnung reduziert, so dass Verschleiß minimiert wird. Das Ringelement erfordert geringe Montagekräfte, so dass die Arbeitssicherheit während der Montage gesteigert wird. Der benötigte Bauraum reduziert sich bzw. der vorhandene Bauraum wird effektiver ausgenutzt. In Abgrenzung zu den zuvor beschriebenen vorhandenen Lösungen, befinden sich bei der Lösung mit den formschlüssigen Ringelement keine Verschraubungselemente im Kraftfluss. Die Kraftübertragung der auftretenden Axialkräfte wird über reinen Formschluss zwischen den zu verbindenden Bauteilen und dem axialen Ringelement ermöglicht. Mit dem Ringelement kommt funktional ein Bauteil für Nennbetrieb und für Reversierbetrieb zum Einsatz. Das Ringelement weist lediglich Kontaktflächen zu dem Wellenelement und dem Nabenelement auf.

In einer bevorzugten Ausgestaltung der Welle-Nabe-Verbindung hintergreift das Wellenelement mit einem Bereich einer Stirnfläche der Steckverzahnung den ersten Axialabschnitt des Ringelements. Hierdurch ist gewährleitet, dass das Wellenelement in radialer Richtung nicht größer dimensioniert werden muss, um an dieser Stelle den Formschluss zu erreichen.

In einer weiterhin bevorzugten Ausgestaltung sind die zumindest zwei Teile des Ringelements untereinander über tangentiale Verschraubungen verbunden. Zusätzlich können die beiden Teile in den zu verschraubenden Bereich Passstifte aufweisen, die bei der Montage ein Zusammensetzen und anschließendes Verschrauben der Einzelteile erleichtern.

In einer zudem bevorzugten Ausgestaltung der Welle-Nabe-Verbindung kann zur Verdrehsicherung des Ringelements zumindest eine Passfeder zwischen dem Ringelement und dem Wellenelement und/oder dem Nabenelement vorgesehen sein. Hierdurch ist vorteilhafterweise eine Verdrehsicherung realisiert, während das Ringelement an sich nicht gegenüber dem Wellenelement und/oder dem Nabenelement fixiert ist, sondern sich im Rahmen der vorgesehenen Passungen bewegen kann.

In einer im Übrigen bevorzugten Ausgestaltung der Welle-Nabe-Verbindung sind vier Paarungen von Axialkontaktflächen vorgesehen. Hierbei befindet sich für eine erste Rotationsrichtung für Wellen- und Nabenelement eine erste und eine zweite Flächenpaarung zwischen dem Wellenelement, dem Nabenelement und jeweils entgegengesetzten Stirnseiten des ersten Axialbereichs des Ringelements in Anlage. Die erste Rotationsrichtung kann derart definiert sein, dass diese sich während eines Nennbetriebs einstellt. In einer entgegengesetzten Rotationsrichtung, die sich dann definitionsgemäß während eines Reversierbetriebs, bzw. während eines entgegengesetzt rotierenden Betriebsfalls, einstellt, sind eine dritte und eine vierte Flächenpaarung zwischen der dem Nabenelement zugewandten Stirnseite des ersten Axialbereichs des Ringelements und der Stirnfläche der Steckverzahnung des Wellenelements und dem zweiten Axialbereich des Ringelements und dem Radialbund des Nabenelements in Anlage.

Um in vorteilhafterweise eine Beölung der Steckverzahnung zumindest des Nennbetriebs zu gewährleiten, kann ein in dem Ringelement in radialer Richtung verlaufender und auf einen Innenumfang des Ringelements mündender Ölkanal vorgesehen sein.

In einer bevorzugten Ausgestaltung der Welle-Nabe-Verbindung umschließt das Ringelement teilweise einen durch die Steckverzahnung zwischen Wellenelement und Nabenelement gebildeten Axialabschnitt. Dies ist insofern vorteilhaft, dass kein zusätzlicher axialer Bauraum für das Ringelement zur Verfügung gestellt werden, da das Ringelement sich in bestehenden Bauraum einfügt. In konkreter Ausgestaltung kann in diesem Bereich vorgesehen sein, dass der Axialabschnitt den Radialbund des Nabenelements umfasst.

In einer weiterhin möglichen Ausgestaltung der Welle-Nabe-Verbindung ist das Ringelement über eine Verschraubung gegenüber dem Wellenelement oder dem Nabenelement gehalten.

Die Aufgabe wird auch gelöst durch ein Planetengetriebe für einen Antriebsstrang einer Windkraftanlage, bestehend aus zumindest einer Planetenstufe und einem mit der zumindest einen Planetenstufe antriebsverbundenen Nabenelement, wobei zumindest eine Antriebsverbindung zwischen der zumindest einen Planetenstufe und dem Nabenelement als Welle-Nabe-Verbindung wie beschrieben ausgeführt ist.

Weiterhin wird die Aufgabe gelöst durch einen Antriebsstrang für eine Windkraftanlage, umfassend eine Welle, die drehmomentübertragend mit einem Getriebe verbunden ist, und eine mit dem Getriebe drehmomentübertragend verbundenen Maschine, dadurch gekennzeichnet, dass das Planetengetriebe wie beschrieben ausgebildet ist.

Schließlich wird die Aufgabe gelöst durch eine Windkraftanlage umfassend eine Gondel, an der drehbar ein Mehrblattrotor angeordnet ist, der mit einem Antriebsstrang drehmomentübertragend verbunden ist, dadurch gekennzeichnet, dass der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage;
Fig. 2: eine mögliche Ausgestaltung einer Welle-Nabe-Verbindung zwischen einer Sonnenwelle und einem Planetenträger;
Fig. 3: eine Detaillierung der Welle-Nabe-Verbindung nach Fig. 2;
Fig. 4: eine weitere Detaillierung der Welle-Nabe-Verbindung nach Fig. 2 und
Fig. 5: eine weitere Detaillierung der Welle-Nabe-Verbindung nach Fig. 2.

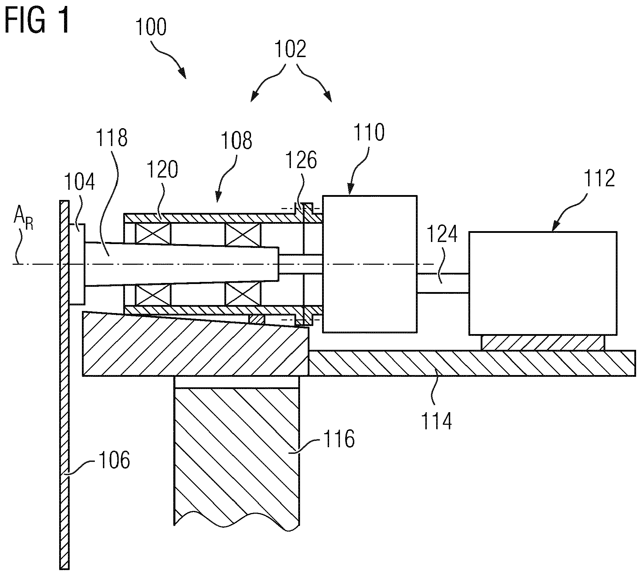

Die Figur 1 zeigt in schematischer und nicht maßstabsgetreuer Darstellung eine Windkraftanlage 100 in einer möglichen Ausführung. Die bereits zuvor und im Weiteren beschriebene Welle-Nabe-Verbindung 10 kann beispielsweise in einer Windkraftanlage 100 verbaut sein. Wesentliches Element der Windkraftanlage 100 ist ein Antriebstrang 102, der vorliegend strukturell einen Rotorflansch 104 mit einem Mehrblattrotor 106, eine Hauptlagereinheit 108, ein Getriebe 110 und einen Generator 112 umfasst. Über einen Maschinenträger 114 werden zumindest die Hauptlagereinheit 108 und der Generator 112 über einen Turm 116 gegenüber einem nicht dargestellten Boden abgestützt. Die Hauptlagereinheit 108 umfasst eine Hauptwelle 118, die über eine Wälzlagerung gegenüber einem Lagergehäuse 120 der Hauptlagereinheit 108 drehbar um eine Drehachse A_{R} gelagert ist. An einem Ende der Hauptwelle 118 ist der Rotorflansch 104 und an diesem der Mehrblattrotor 106 gehalten. Das andere Ende der Hauptwelle 118 ist vorliegend starr mit dem Getriebe 110 antriebsmäßig verbunden, um ein von dem Rotor 106 aufgebrachtes Antriebsmoment in das Getriebe 110 einzuleiten. Das Getriebe 110 kann als Planetengetriebe mit einer oder mehreren Planetenstufen oder mit einfachen Stirnradstufen ausgeführt sein. Das Getriebe 110 ist über eine Generatorwelle 124 antriebsmäßig mit dem Generator 112 verbunden. Über einen Flansch 126 ist das Lagergehäuse 120 mit dem Getriebe 110 verbunden. Ein Reaktionsmoment des Getriebes 110 ist über den Flansch 126 gegenüber dem Maschinenträger 114 abgestützt. In einer alternativen Anordnung der Windkraftanlage 100 kann das Getriebe 110 über eine Drehmomentstütze gegenüber dem Maschinenträger 114 abgestützt werden.

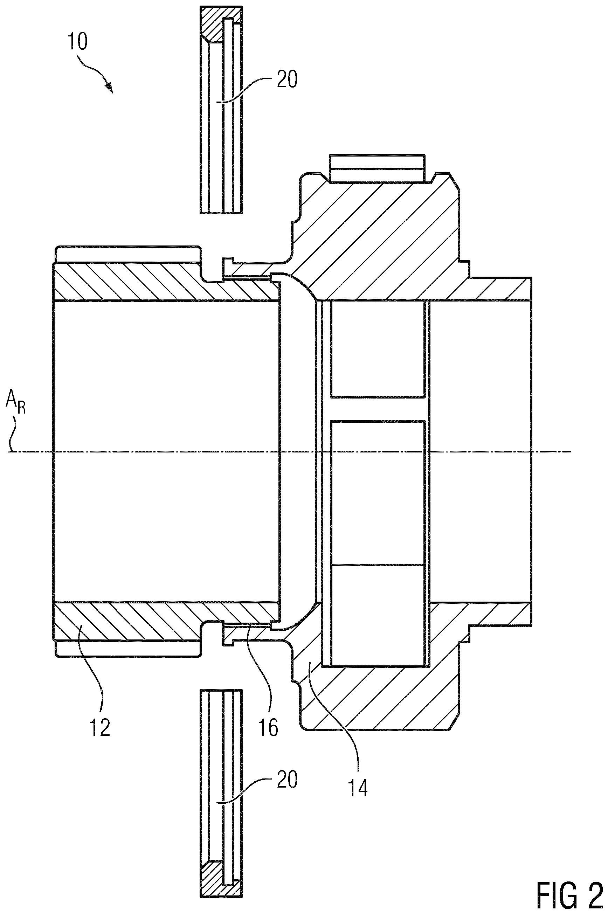

Die Figur 2 zeigt exemplarisch an einem Planetengetriebe eine Welle-Nabe-Verbindung 10 zwischen einem als Sonnenwelle ausgeführten Wellenelement 12 und einem als Planetenträger ausgeführten Nabenelement 14. Im Folgenden werden zum besseren Verständnis die Begrifflichkeiten Sonnenwelle und Planetenträger benutzt.

Die Sonnenwelle 12 und der Planetenträger 14 sind über Steckverzahnung 16 antriebsmäßig miteinander verbunden. Mit A_{R} ist die Hauptrotationsachse bezeichnet. Über die Steckverzahnung 16 kann in beiden Rotationsrichtungen ein Drehmoment übertragen werden. Vorliegend wird davon ausgegangen, dass die Verzahnungselemente, die über Sonnenwelle 12 und Planetenträger 14 an- bzw. abgetrieben werden, schrägverzahnt sind. Hierdurch entstehen Axialkräfte, die über die Steckverzahnung 16 übertragen werden müssen. Hierzu ist ein die Sonnenwelle 12 und den Planetenträger 14 verbindendes Ringelement 20 vorgesehen, das vorliegend in radialer Richtung zweiteilig ausgeführt ist und aus zwei Hälften besteht. Die beiden Hälften des Ringelements 20 sind in der Figur 2 explodiert jeweils oberhalb und unterhalb der Steckverzahnung 16 dargestellt.

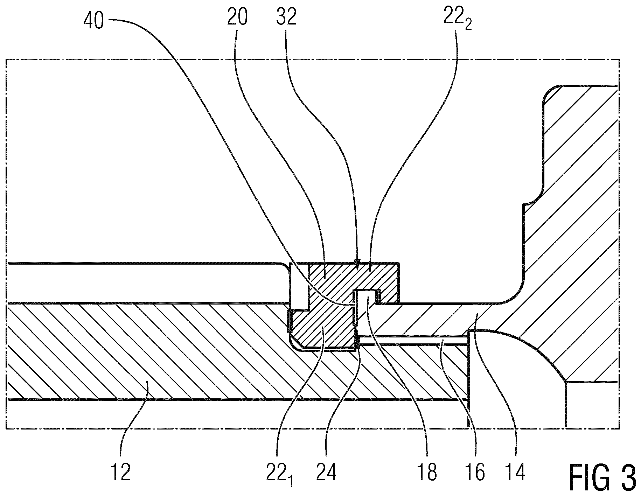

Die Figur 3 zeigt die Welle-Nabe-Verbindung 10 in einer Detailansicht. Auch hier wird die Welle-Nabe-Verbindung 10 zwischen einer Sonnenwelle 12 und einem Planetenträger 14 beschrieben, wobei bereits zuvor darauf hingewiesen wurde, dass dieses nur mögliche Ausgestaltungen für ein Wellenelement und ein Nabenelement sind. Das Ringelement 20 ist vorliegend auch zumindest zweiteilig. Das Ringelement 20 kann in einen ersten Axialabschnitt 22₁ und einen zweiten Axialabschnitt 22₂ unterteilt, wobei diese beiden Abschnitte strukturell betrachten einteilig zueinander sind. Der erste Axialabschnitt 22₁ sitzt zwischen der Sonnenwelle 12 und dem Planetenträger 14 ein und der zweite Axialabschnitt 22₂ hintergreift einen Radialbund 18 des Planetenträgers 14 aus einer ersten axialen Richtung. Gleichzeitig hintergreift die Sonnenwelle 12 den ersten Axialabschnitt 22₁ aus der ersten axialen Richtung. Insbesondere hintergreift die Sonnenwelle 12 mit einem Bereich einer Stirnfläche 24 der Steckverzahnung 16 den ersten Axialabschnitt 22₁ des Ringelements 20. Das Ringelement 20 umschließt teilweise einen durch die Steckverzahnung 16 zwischen Sonnenwelle 12 und Nabenelement 14 gebildeten Axialkragen 32. Der Axialkragen 32 umfasst den Radialbund 18 des Nabenelements 14.

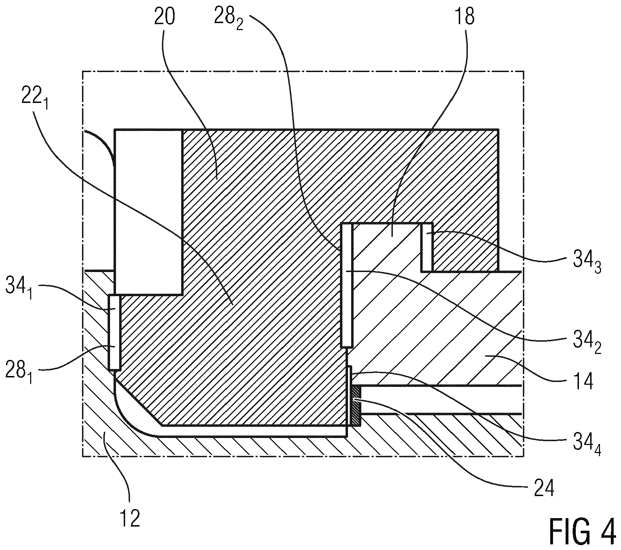

In Abhängigkeit der herrschenden Rotationsrichtung, entweder während des Nennbetriebes oder im entgegengesetzten Reversierbetrieb, kommen unterschiedliche Axialkontaktflächen zwischen Ringelement 20, Sonnenwelle 12 und Planetenträger 14 zur Anlage, die nachfolgend unter Verweis auf die Figur 4 erläutert werden.

Bei der im Nennbetrieb herrschenden Rotationsrichtung befindet sich eine erste und eine zweite Paarung von Axialkontaktflächen 34₁, 34₂ zwischen der Sonnenwelle 12, dem Planetenträger 14 und jeweils entgegengesetzten Stirnseiten 28₁, 28₂ des ersten Axialabschnitts 22₁ des Ringelements 20 in Anlage. Bei der im Reversierbetrieb herrschenden Rotationsrichtung befindet sich eine dritte und eine vierte Paarung von Axialkontaktflächen 34₃, 34₄ zwischen der dem Planetenträger 14 zugewandten Stirnseite 28₂ des ersten Axialabschnitts 22₁ des Ringelements 20 und der Stirnfläche 24 der Steckverzahnung 16 der Sonnenwelle 12 und dem zweiten Axialbereich des Ringelements 20 und dem Radialbund 18 des Planetenträgers 14 in Anlage. Es kann ferner ein Ölkanal vorgesehen sein, der in dem Ringelement 20 in radialer Richtung verläuft und auf einen Innenumfang des Ringelements 20 mündet.

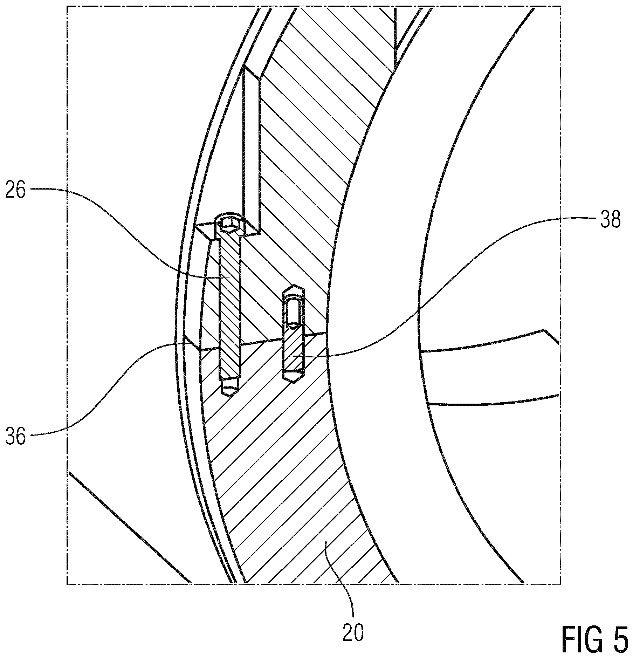

Die Figur 5 zeigt eine Detaillierung des Ringelements 20. Zu erkennen ist der Bereich der Trennstelle 36 zwischen den beiden Hälften eines zweiteiligen Ringelements 20. Die Verbindung im Bereich der Trennstelle 36 ist vorliegend über eine tangentiale Verschraubung 26 zwischen den beiden Hälften realisiert. Zusätzlich ist vorliegend ein Passstift 38 eingesetzt, wobei auch mehrere Passstifte verwendet werden können. Weiterhin kann eine Passfeder 40 als Verdrehsicherung zwischen dem Ringelement 20 und dem Wellenelement 12 vorgesehen sein, so dass mittelbar das Ringelement 20 auch gegenüber dem Nabenelement 14 gegen Verdrehen gesichert ist.

### Bezugszeichenliste

- 10: Welle-Nabe-Verbindung
- 12: Wellenelement
- 14: Nabenelement
- 16: Steckverzahnung
- 18: Radialbund
- 20: Ringelement
- 22: Axial ab schnitt
- 24: Stirnfläche
- 26: Verschraubung
- 28: Stirnseite
- 32: Axialkragen
- 34: Axialkontaktfläche
- 36: Trennstelle
- 38: Passstift
- 40: Passfeder
- 100: Windkraftanlage
- 102: Antriebstrang
- 104: Rotorflansch
- 106: Mehrblattrotor
- 108: Hauptlagereinheit
- 110: Getriebe
- 112: Generator
- 114: Maschinenträger
- 116: Turm
- 118: Hauptwelle
- 120: Lagergehäuse
- 124: Generatorwelle
- 126: Flansch

## Patentansprüche

**1.** Welle-Nabe-Verbindung (10) für eine Maschineneinheit, insbesondere ein Planetengetriebe, mit
einem Wellenelement,
einem mit dem Wellenelement (12) über eine Steckverzahnung (16) um eine antriebsverbundenes und das Wellenelement (12) umgebendes Nabenelement (14), wobei zur Axialkraftübertragung ein das Wellenelement (12) und das Nabenelement (14) verbindende Ringelement (20) vorgesehen und
das Ringelement (20) in radialer Richtung zumindest zweiteilig ausgeführt ist und einen zwischen dem Wellenelement (12) und dem Nabenelement (14) einsitzenden ersten Axialabschnitt (22₁) und einen zweiten Axialabschnitt (22₂) ausbildet, wobei der zweite Axialabschnitt (22₂) einen Radialbund (18) des Nabenelements (14) und das Wellenelement (12) den ersten Axialabschnitt (22₁) aus einer ersten axialen Richtung hintergreifen.

**2.** Welle-Nabe-Verbindung (10) nach Anspruch 1, **dadurch gekennzeichnet, dass** das Wellenelement (12) mit einem Bereich einer Stirnfläche (24) der Steckverzahnung (16) den ersten Axialabschnitt (22₁) des Ringelements (20) hintergreift.

**3.** Welle-Nabe-Verbindung (10) nach Anspruch 1 oder 2, **dadurch gekennzeichnet, dass** die zumindest zwei Teile des Ringelements (20) untereinander über tangentiale Verschraubungen (26), eine Verklebung, einen außenumfänglich, insbesondere aufgeschrumpften, Spannring und/oder eine formschlüssige Verhakung verbunden sind.

**4.** Welle-Nabe-Verbindung (10) nach Anspruch 3, **dadurch gekennzeichnet, dass** die zumindest zwei Teile des Ringelements (20) untereinander zusätzlich über Passstifte (38) verbunden sind.

**5.** Welle-Nabe-Verbindung (10) nach einem der Ansprüche 1 bis 4, **dadurch gekennzeichnet, dass** zur Verdrehsicherung des Ringelements (20) zumindest eine Passfeder zwischen dem Ringelement (20) und dem Wellenelement (12) und/oder dem Nabenelement (14) vorgesehen ist.

**6.** Welle-Nabe-Verbindung (10) nach einem der Ansprüche 1 bis 5, **dadurch gekennzeichnet, dass** vier Paarungen von Axialkontaktflächen vorgesehen sind, wobei in einer ersten Rotationsrichtung
eine erste und eine zweite Paarung zwischen dem Wellenelement (12), dem Nabenelement (14) und jeweils entgegengesetzten Stirnseiten (28₁, 28₂) des ersten Axialabschnitts (22₁) des Ringelements (20) in Anlage sind und
in einer entgegengesetzten Rotationsrichtung
eine dritte und eine vierte Paarung zwischen der dem Nabenelement zugewandten Stirnseite (28₂) des ersten Axialabschnitts (22₁) des Ringelements (20) und der Stirnfläche (24) der Steckverzahnung (16) des Wellenelements (12) und dem zweiten Axialbereich des Ringelements (20) und dem Radialbund (18) des Nabenelements (14) in Anlage sind.

**7.** Welle-Nabe-Verbindung (10) nach einem der Ansprüche 1 bis 6, **dadurch gekennzeichnet, dass** ein in dem Ringelement (20) in radialer Richtung verlaufender und auf einen Innenumfang des Ringelements (20) mündender Ölkanal vorgesehen ist.

**8.** Welle-Nabe-Verbindung (10) nach einem der Ansprüche 1 bis 7, **dadurch gekennzeichnet, dass** das Ringelement (20) teilweise einen durch die Steckverzahnung (16) zwischen Wellenelement (12) und Nabenelement (14) gebildeten Axialkragen (32) umschließt.

**9.** Welle-Nabe-Verbindung (10) nach Anspruch 8, **dadurch gekennzeichnet, dass** der Axialkragen (32) den Radialbund (18) des Nabenelements (14) umfasst.

**10.** Welle-Nabe-Verbindung (10) nach einem der Ansprüche 1 bis 9, **dadurch gekennzeichnet, dass** das Ringelement (20) über eine Verschraubung und bevorzugt zusätzlich über Passstifte gegenüber dem Wellenelement (12) oder dem Nabenelement (14) gehalten ist.

**11.** Welle-Nabe-Verbindung (10) nach einem der Ansprüche 1 bis 10, **dadurch gekennzeichnet, dass** das Ringelement (20) über zumindest eine Passfeder (40) zwischen dem Ringelement (20) und dem Wellenelement (12) oder dem Nabenelement (14) gehalten ist.

**11.** Planetengetriebe (110) für einen Antriebsstrang einer Windkraftanlage, bestehend aus zumindest einer Planetenstufe und einem mit der zumindest einen Planetenstufe antriebsverbundenen Nabenelement, wobei zumindest eine Antriebsverbindung zwischen der zumindest einen Planetenstufe und dem Nabenelement als Welle-Nabe-Verbindung (10) nach einem der vorangegangenen Ansprüche ausgeführt ist.

**12.** Antriebsstrang für eine Windkraftanlage, umfassend eine Welle (74), die drehmomentübertragend mit einem Getriebe (110) verbunden ist, und eine mit dem Getriebe (110) drehmomentübertragend verbundenen Maschine (80), **dadurch gekennzeichnet, dass** das Getriebe (110) nach Anspruch 11 ausgebildet ist.

**13.** Windkraftanlage umfassend eine Gondel (71), an der drehbar ein Mehrblattrotor (72) angeordnet ist, der mit einem Antriebsstrang (76) drehmomentübertragend verbunden ist, **dadurch gekennzeichnet, dass** der Antriebsstrang (76) nach Anspruch 12 ausgebildet ist.
